Europäisches Patentamt

European Patent Office

Office européen des brevets

(19)

(11) Veröffentlichungsnummer : **0 589 910 B1**

(12) **EUROPÄISCHE PATENTSCHRIFT**

(45) Veröffentlichungstag der Patentschrift :
22.11.95 Patentblatt 95/47

(21) Anmeldenummer : 92910405.7

(22) Anmeldetag : 21.05.92

(86) Internationale Anmeldenummer :
PCT/EP92/01136

(87) Internationale Veröffentlichungsnummer :
WO 93/00624 07.01.93 Gazette 93/02

(51) Int. Cl.⁶ : **G05D 1/02**, B60K 31/12,
B60K 41/06

(54) VERFAHREN ZUR STEUERUNG EINES SELBSTTÄTIG SCHALTENDEN GETRIEBES EINES
KRAFTFAHRZEUGS.

(30) Priorität : 21.06.91 DE 4120603

(43) Veröffentlichungstag der Anmeldung :
06.04.94 Patentblatt 94/14

(45) Bekanntmachung des Hinweises auf die
Patenterteilung :
22.11.95 Patentblatt 95/47

(84) Benannte Vertragsstaaten :
DE ES FR GB IT SE

(56) Entgegenhaltungen :
DE-A- 3 012 896

(56) Entgegenhaltungen :
DE-A- 3 341 652
DE-A- 3 615 961
DE-A- 3 922 040
DE-A- 3 922 051

(73) Patentinhaber : Dr.Ing.h.c. F. Porsche
Aktiengesellschaft
Porschestrasse 42
D-70435 Stuttgart (DE)

(72) Erfinder : SEIDEL, Willi
Theodor-Heuss-Strasse 101
D-7147 Eberdingen-Hochdorf (DE)
Erfinder : PETERSMANN, Joseph
Eichenweg 6
D-7251 Wimsheim (DE)

**Beschreibung**

Die Erfindung betrifft ein Verfahren nach der Gattung des Hauptanspruchs. Übliche automatische Getriebesteuerungen von mit Brennkraftmaschinen angetriebenen Kraftfahrzeugen leiten beim Zurücknehmen des Fahrpedals in der Regel eine Hochschaltung (Verkleinerung der Übersetzung) ein. Bei Kurvenfahrten oder beim Bremsen ist dies jedoch nicht immer erwünscht, da derartige Lastwechsel u. U. zu unsicheren Fahrzuständen führen können oder beim Wiederbeschleunigen des Kraftfahrzeuges durch verstärktes Gasgeben eine oder mehrere Rückschaltungen (Vergrößerung der Übersetzung) erzwungen werden müssen.

Aus der DE- 33 41 652 C2 ist es in diesem Zusammenhang bekannt geworden, diese Hochschaltungen in Kurven durch Erfassen der Querbeschleunigung des Kraftfahrzeuges zu vermeiden. Hierdurch kann jedoch lediglich ein Schalten in Kurven vermieden werden.

Um auch bereits beim Heranfahren an Kurven Hochschaltungen gezielt verhindern zu können, wird bei dem Verfahren zur Steuerung eines selbsttätig schaltenden Getriebes nach der DE- 39 22 040 A1 die Fahrpedaländerungsgeschwindigkeit erfaßt und bei Unterschreiten eines bestimmten (negativen) Grenzwerts ein Signal zur Unterbindung eines Hochschaltvorgangs abgeleitet, sofern Schubbetrieb erkannt wird. Daraufhin werden Hochschaltungen unterbunden, bis wiederum Zugbetrieb auftritt und ein festgelegter Zeitraum verstrichen ist.

In der DE- 39 22 051 A1 ist zusätzlich vorgesehen, diesen Zeitraum von einem weiteren Parameter (Fahraktivität) abhängig zu machen, der aus einem oder einer Kombination von mehreren Betriebs- bzw. Fahrparametern eines Kraftfahrzeugs abgeleitet wird und einen Fahrstil eines Fahrers oder eine gerade vorherrschende Verkehrssituation bewertet.

Schließlich ist es aus der DE- 36 15 961 A1 bekannt, in einer Steuereinrichtung für ein Automatgetriebe eine Rückschaltung nur dann zuzulassen, wenn entweder die Fahrzeukurvenfahrt oder die Fahrzeugbeschleunigung jeweils unter einem vorgegebenen Wert liegt. Sind diese beiden Bedingungen nicht erfüllt, so wird vor einer Rückschaltung außerdem geprüft, ob der aus Kurvenfahrt und Fahrzeugbeschleunigung gebildete Betriebspunkt unterhalb einer vom Fahrbahnzustand abhängigen Grenzlinie liegt und damit ein Schleudern des Fahrzeuges nicht möglich ist.

Ausgehend von diesem Stand der Technik ist es Aufgabe der Erfindung, ein Verfahren zur Steuerung eines selbsttätig schaltenden Getriebes eines Kraftfahrzeugs zu schaffen, das bezüglich des Schaltverhaltens beim Bremsen, insbesondere vor Kurven weiter verbessert ist.

Die Aufgabe wird erfindungsgemäß durch die kennzeichnenden Merkmale des Anspruchs 1 gelöst. Weitere, die Erfindung ausgestaltende Merkmale sind in den Unteransprüchen enthalten.

Beim Abbremsen des Kraftfahrzeugs können bei Vorliegen bestimmter Bedingungen selbsttätig Rückschaltungen durchgeführt werden; die Einhaltung der Bedingungen gewährleistet dabei einen sicheren Betrieb des Kraftfahrzeugs. So wird insbesondere überwacht, daß die Querbeschleunigung nicht zu hoch ist, das Fahrzeug nicht zu stark verzögert und die Fahrgeschwindigkeit nicht zu hoch ist, um einen Verlust insbesondere der Längs- und Seitenführungskräfte der Räder des Kraftfahrzeugs zu vermeiden.

Das sich nach einer Rückschaltung verstärkt auf die Antriebsräder auswirkende Bremsmoment der Antriebs- (Brennkraft-) Maschine kann sich daher nicht negativ auf das Fahrverhalten des Kraftfahrzeugs auswirken. Die Rückschaltung erfolgt hierbei stufenweise, jeweils unter Zwischenschaltung eines bestimmten Zeitraums.

Das Rückschalten beim Bremsen wird vorzugsweise dann eingeleitet, wenn ein Zustand einer Hochschaltverhinderung aktiv ist. Dieser wird in bekannter Weise aktiviert, wenn das Kraftfahrzeug an eine Kurve heranfährt und der Fahrer das Fahrpedal raltiv rasch zurücknimmt.

Durch die Rückschaltungen beim Bremsen wird einerseits die Bremswirkung der Antriebsmaschine des Kraftfahrzeugs im Schubbetrieb verstärkt, so daß die Bremse (Betriebsbremse) des Kraftfahrzeugs entlastet wird. Andererseits wird im Zusammenhang mit einer Gangfesthaltung vor, in und nach Kurven erreicht, daß dem Fahrer nach Durchfahren einer Kurve immer die für ein Wiederbeschleunigen des Kraftfahrzeugs optimale Gangstufe zur Verfügung steht.

Die Erfindung wird nachstehend anhand der in den Zeichnungen dargestellten Ausführungsformen erläutert.

Es zeigt:

Fig. 1    ein Blockschaltbild einer elektro-hydraulischen Steuerung eines selbsttätig schaltenden Getriebes eines Kraftfahrzeuges,

Fig. 2    eine Grenzkennlinie zur Erkennung von Zug-/Schubbetrieb,

Fig. 3    ein Kennfeld für einen motordrehzahl- und gangstufenabhängigen Kennfeldwert,

Fig. 4    eine erste und eine zweite Grenzkennlinie für eine Querbeschleunigung,

Fig. 5    ein Kennfeld für einen gangstufen- und fahraktivitätsabhängigen Faktor,

Fig. 6     eine Kennlinie, die die Abhängigkeit von Zeiträumen in Abhängigkeit von einer Fahraktivität zeigt.

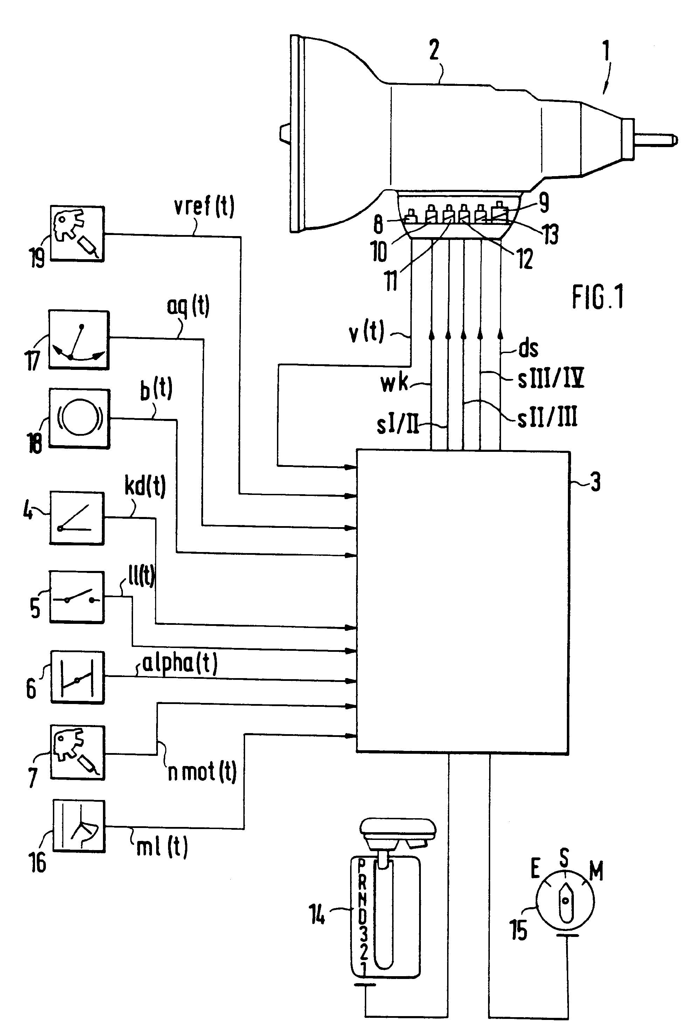

In **Fig. 1** ist mit 1 eine elektro-hydraulische Steuerung eines selbsttätig schaltenden Kraftfahrzeuggetriebes 2 gezeigt, wie sie beispielsweise in Bosch "Technische Berichte", 7(1983)4, auf den Seiten 160 bis 166 und in der ATZ 85(1983)6 auf den Seiten 401 bis 405 beschrieben ist.

Größen oder Signale, die sich mit der Zeit t ändern, sind nachfolgend als Funktionen der Zeit f(t) dargestellt.

Ein Steuergerät 3 steuert in Abhängigkeit von einem Kick-Down-Signal kd(t) eines Kick-Down-Gebers 4 am Fahrpedal des Kraftfahrzeuges sowie einem Leerlaufsignal ll(t) eines Drosselklappenschalters 5, einer Drosselklappenstellung alpha(t) eines Drosselklappenwinkelgebers 6 (oder eines hierzu äquivalenten Stellungsgebers für die Stellung eines die Leistung der Antriebsmaschine des Kraftfahrzeugs beeinflussenden Organs, wie zum Beispiel einem Fahrpedal oder einem Einspritzpumpenhebel einer selbstzündenden Dieselbrennkraftmaschine), einer Motordrehzahl nmot(t) eines Motordrehzahlgebers 7 einer nicht gezeigten Brennkraftmaschine und einer Fahrgeschwindigkeit v(t) (Getriebeausgangsdrehzahl) eines Getriebeausgangsdrehzahlgebers 8

- einen Druckregler 9 für den Druck eines Hydraulikfluids (Signalausgang ds),
- ein erstes Elektromagnetventil 10 zur Steuerung eines Wandlers bzw. einer Wandlerüberbrückungskupplung (Signalausgang wk),
- ein zweites Elektromagnetventil 11 zur Steuerung eines Gangstufenwechsels zwischen den Gangstufen I und II (Signalausgang sI/II),
- ein drittes Elektromagnetventil 12 zur Steuerung des Gangstufenwechsels zwischen den Gangstufen II und III (Signalausgang sII/III) und
- ein viertes Elektromagnetventil 13 zur Steuerung des Gangstufenwechsels zwischen den Gangstufen III/IV (Signalausgang sIII/IV).

Die Steuerung ist hierbei üblicherweise vom Fahrzeugführer über einen Wählhebel 14 zur Vorwahl von Fahrstufen P, R, N, D, 3, 2, 1 beeinflußbar. Hiermit sind die Fahrstufen P (Parksperre), R (Rückwärtsgangstufe), N (Leergangstufe), D (selbsttätige Schaltung aller vier Gangstufen IV, III, II, I), 3 (selbsttätige Schaltung der drei untersten Gangstufen III, II, I), 2 (selbsttätige Schaltung der Gangstufen II und I) und 1 (Festlegung der ersten Gangstufe I) anwendbar.

Bei dem oben beschriebenen Getriebe ist ferner ein Programmwählschalter 15 vorgesehen, mit dem wenigstens zwei Schaltprogramme ("E" für ein verbrauchsoptimiertes Schaltprogramm (Schaltkennfeld SKF1), "S" für ein leistungsoptimiertes Schaltprogramm (Schaltkennfeld SKF5), "M" für ein manuelles Programm, bei dem die Gangstufen IV, III, II, I über die Stellungen D, 3, 2 und 1 des Wählhebels direkt vorgewählt werden können), bzw. zwei Schaltkennfelder SKFj, nach denen die vier Gangstufen in den Fahrstufen D, III und II selbsttätig geschaltet werden, manuell anwählbar sind.

Alternativ zum Programmwählschalter 15 kann auch im Steuergerät 3 ein Steuerverfahren implementiert sein, das beispielsweise entsprechend der DE- 33 48 652 C2 oder der DE- 39 22 051 AI den Fahrstil eines Fahrers oder dessen verkehrssituationsbedingtes Handeln im Bezug auf die Steuerung des Kraftfahrzeugs längerfristig bewertet und eine Fahraktivität SK(t) (Fahrpedalaktivität) aus einer oder mehreren Betriebs- bzw. Fahrparametern ableitet. Auf der Basis dieser Fahraktivität SK(t) kann dann, entsprechend einer Schaltstellung des Umschalters 15, eines von mehreren Schaltprogrammen bzw. Schaltkennfeldern SKFj zur Schaltung der Gangstufen IV, III, II und I herangezogen werden.

Zur Durchführung des Verfahrens sind neben den Gebern 4 bis 7 können schließlich noch weitere Geber, wie z. B. ein Luftmengen- bzw. Luftmassenmesser 16, der eine der Brennkraftmaschine zugeführten Luftmenge bzw. Luftmasse ml(t) erfaßt, sowie ein Querbeschleunigungsgeber 17 (Querbeschleunigung aq(t)) und ein Bremssignalgeber 18 (Bremssignal b(t)) erforderlich, sowie ein Referenzgeschwindigkeitsgeber 19, der die Geschwindigkeit von Rädern einer nicht angetriebenen Achse erfaßt (Referenzgeschwindigkeit vref(t)).

Es ist insbesondere wünschenswert, daß eine Hochschaltung eines derartigen Getriebes vermieden wird, wenn das Fahrzeug sich beispielsweise einer Kurve nähert und der Fahrer vom Fahrpedal geht.

Wie schon in der DE- 39 22 040 A1 und der DE- 39 22 051 A1 gezeigt, kann eine derartige Kurvenerkennung stattfinden, indem man die zeitliche Änderung der Drosselklappenstellung dalpha(t)/dt abtastet. Gewöhnlich nimmt nämlich ein Fahrer vor einer Kurve das Fahrpedal - und hiermit in der Regel auch die Drosselklappe - schneller zurück als er es unter normalen Umständen tut, um beispielsweise die Fahrgeschwindigkeit v(t) zu reduzieren.

Eine bei Zurücknahme der Fahrpedalstellung bzw. bei unbetätigtem Fahrpedal von üblichen Getriebesteuerungen von Stufengetrieben vorgenommene Hochschaltung wird nach dem Verfahren verhindert, solange der Zustand einer Hochschaltverhinderung hsv aktiv ist, hsv =1, wobei der Zustand der Hochschaltverhinderung vom inaktiven Zustand hsv=0 in den aktiven Zustand hsv=1 übergeht, wenn eine zeitliche Änderung dalpha(t)/dt der Drosselklappenstellung alpha(t) einen negativen Grenzwert -alphag unterschreitet und Schubbetrieb erkannt wird. Der Zustand der Hochschaltverhinderung hsv geht, sobald Zugbe-

EP 0 589 910 B1

trieb erkannt wird, nach Ablauf eines ersten Zeitraums T1(SK(t)) in den inaktiven Zustand über: hsv=0.

Bei den Begriffen Zugbetrieb und Schubbetrieb kommt es auf das betrachtete System an. Hierbei kann unterschieden werden:

- Gesamtsystem Kraftfahrzeug: Unter Zugbetrieb ist die Beschleunigung des Kraftfahrzeuges (zeitliche Änderung der Fahrgeschwindigkeit) dv(t)/dt>0 zu verstehen, während der Schubbetrieb einer Verzögerung des Kraftfahrzeugs entspricht dv(t)/dt<0.
- System Kupplung (Drehmomentwandler) / Getriebe: Bei Zugbetrieb ist die Eingangsdrehzahl der Kupplung (des Drehmomentwandlers) größer als dessen Ausgangsdrehzahl / das Getriebe ist gegensinnig verspannt, während bei Schubbetrieb die Eingangsdrehzahl kleiner als die Ausgangsdrehzahl / das Getriebe gleichsinnig verspannt ist.
- System Brennkraftmaschine: Zugbetrieb bedeutet Drosselklappenstellung alpha(t)>0 (Drosselklappe geöffnet) und zeitliche Änderung der Motordrehzahl dnmot(t)/dt>0, während im Schubbetrieb die Drosselklappenstellung alpha(t)=0 (Drosselklappe geschlossen) oder die zeitliche Änderung der Motordrehzahl dnmot(t)/dt<0 ist.

Bezüglich der Getriebesteuerung und damit auch dem Gesamtverhalten des Kraftfahrzeugs hat es sich als sinnvoll erwiesen, die Begriffe Zugbetrieb und Schubbetrieb folgendermaßen nachzubilden:

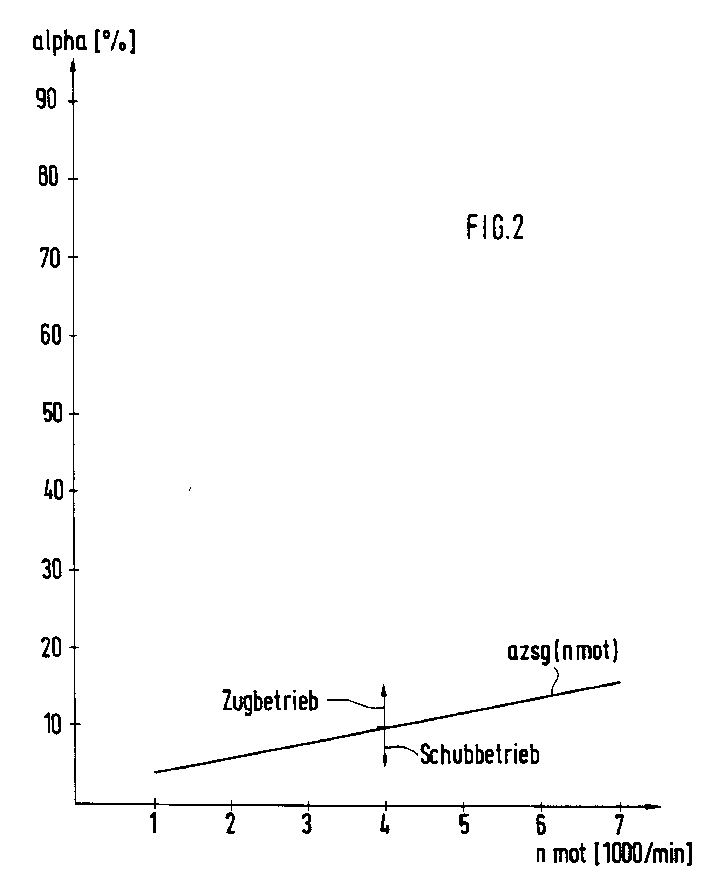

- Schubbetrieb wird erkannt, wenn die Drosselklappenstellung alpha(t) unter eine motordrehzahlabhängige Grenzkennlinie azsg(nmot), wie sie in **Fig. 2** gezeigt ist, fällt:

$$alpha(t)<azsg(nmot).$$

- Zugbetrieb wird erkannt, wenn sowohl die Drosselklappenstellung alpha(t) die motordrehzahlabhängige Grenzkennlinie azsg(nmot) nach **Fig. 2** überschreitet, als auch die zeitliche Änderung der Fahrgeschwindigkeit dv(t)/dt positive Werte annimmt: $alpha(t)>azsg(nmot) \cap dv(t)/dt>0$.

Auf die so festgelegten Begriffe für Zug- und Schubbetrieb wird in der gesamten Patentanmeldung Bezug genommen.

Entsprechend der Erfindung werden beim Bremsen stufenweise Rückschaltungen ermöglicht. Die stufenweise Rückschaltung erfolgt jedoch nur dann, wenn sowohl

- eine Betriebsbremse des Kraftfahrzeugs betätigt ist, Bremssignal b(t)=1, oder alternativ dazu oder ergänzend die zeitliche Änderung der Fahrgeschwindigkeit dv(t)/dt kleiner als ein erster negativer Längsbeschleunigungs- Grenzwert albg(g, nmot, t), albg(g, nmot, t)<0 ist:

$$dv(t)/dt<albg(g, nmot, t),$$

als auch

- die mittels des Querbeschleunigungssensors 17 erfaßte Querbeschleunigung aq(t) unterhalb einer ersten fahrgeschwindigkeitsabhängigen Querbeschleunigungs- Grenzlinie aqg1(v(t)) liegt:

$$aq(t)<aqg1(v(t)),$$

als auch

- die zeitliche Änderung der Fahrgeschwindigkeit dv(t)/dt größer als ein zweiter negativer Längsbeschleunigungs-Grenzwert $albbg(nmot, g, SK(t), t)=k(g-1, SK(t))*dv/dt|_{g-1}$ ist:

$$dv(t)/dt>albbg(nmot, g, SK(t), t); \quad dv(t)/dt>k(g - 1, SK(t)) * dv/dt|_{g-1},$$

als auch

- die Fahrgeschwindigkeit v(t) kleiner als ein zweiter FahrgeschwindigkeitsGrenzwert vg(g, SK(t), t) ist:

$$v(t)<vg(g, SK(t), t).$$

Bevorzugt werden die Rückschaltungen nur dann vorgenommen, wenn die obigen Bedingungen für deren Zulassung erfüllt sind und zusätzlich der Zustand der Hochschaltverhinderung aktiv ist, hsv=1.

Die Rückschaltung erfolgt um jeweils eine Gangstufe, wobei zwischen zwei Schaltungen wenigstens ein zweiter Zeitraum T2(SK(t)) liegt. Die stufenweise Rückschaltung wird bis zu derjenigen Gangstufe g durchgeführt, die beim augenblicklichen Betriebspunkt des Kraftfahrzeugs im augenblicklich eingestellten Schaltkennfeld (SKFj) zulässig ist (zum Vermeiden von Überdrehzahlen der Brennkraftmaschine).

Der erste negative Längsbeschleunigungs- Grenzwert albg(g, nmot, t) ist von den augenblicklichen Werten der eingelegten Gangstufe g und der Motordrehzahl nmot(t) abhängig und entspricht hierbei der jeweiligen (negativen) Längsbeschleunigung dv/dt (und damit der Verzögerung) des in definiertem Zustand (Beladung, Reifenluftdruck, Umweltbedingungen usw.) auf ebener Fahrbahn rollenden Kraftfahrzeugs bei geschlossener Drosselklappe alpha=0, bei den jeweiligen Wertepaaren der augenblicklich eingelegten Gangstufe g und der Motordrehzahl nmot(t).

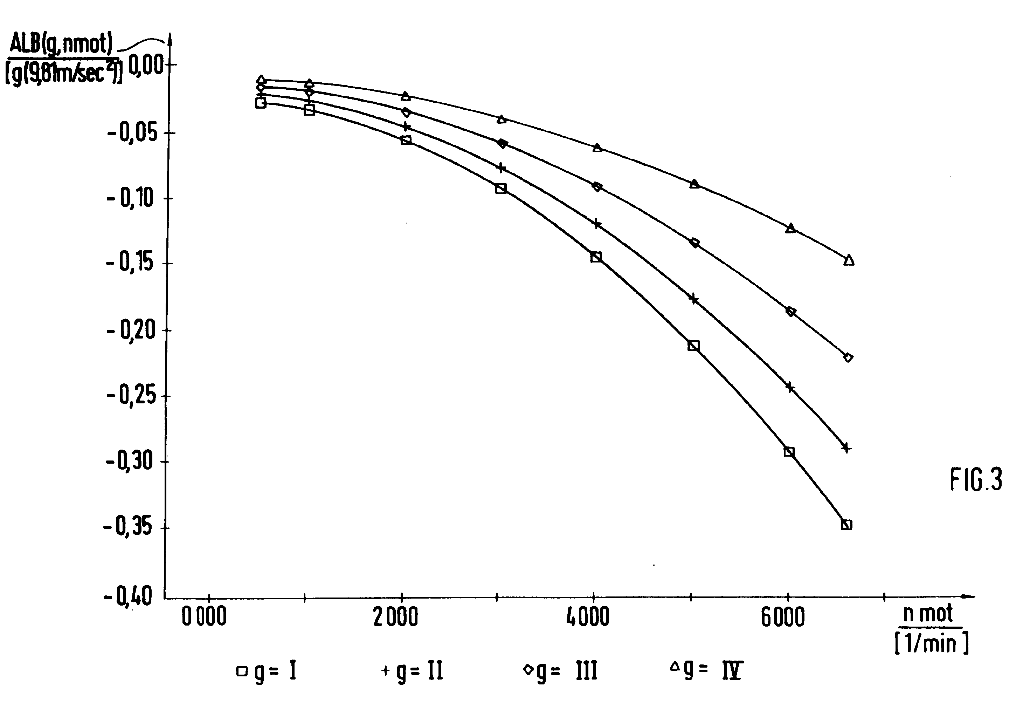

Der erste negative Längsbeschleunigungs- Grenzwert albg(g, nmot, t) wird aus den Augenblickswerten dieser Größen bevorzugt über ein erstes Kennfeld ALB(g, nmot) ermittelt: albg(g, nmot, t)=ALB(g, nmot). Ein Beispiel für ein derartiges erstes Kennfeld ALB(g, nmot) ist in **Fig. 3** abgebildet. Alternativ hierzu kann selbstverständlich die Ermittlung der LängsbeschleunigungsGrenzwerte albg(g, nmot, t) auch über einen entsprechenden funktionellen Zusammenhang erfolgen.

4

Die Kennlinien nach **Fig. 3** zeigen deutlich die Abhängigkeit der Verzögerungswerte eines Kraftfahrzeugs mit Brennkraftmaschine von der Gangstufe g und der Motordrehzahl nmot(t). Die einzelnen Kennlinien für die - ohne Beschränkung der Allgemeinheit - vier Gangstufen I, II, III, IV weisen hierbei den auf der horizontalen Achse aufgetragenen Werten für die Motordrehzahl nmot in Umdrehungen pro Minute (1/min) jeweils einen auf der vertikalen Achse aufgetragenen bestimmten Wert ALB in der Einheit g-9,81... Meter pro Sekunde$^2$ (9,81m/s$^2$) zu.

Für wachsende Werte der Motordrehzahl nmot(t) werden die Verzögerungswerte größer durch die sich verstärkende Motorbremswirkung und den sich erhöhenden Rollwiderstand (Luftwiderstand) des Fahrzeugs. Ebenso steigen die Verzögerungswerte mit kleiner werdender Gangstufe g, da sich das Bremsmoment der Brennkraftmaschine aufgrund der höheren Übersetzung verstärkt auf die Verzögerungsrate des Kraftfahrzeugs auswirkt.

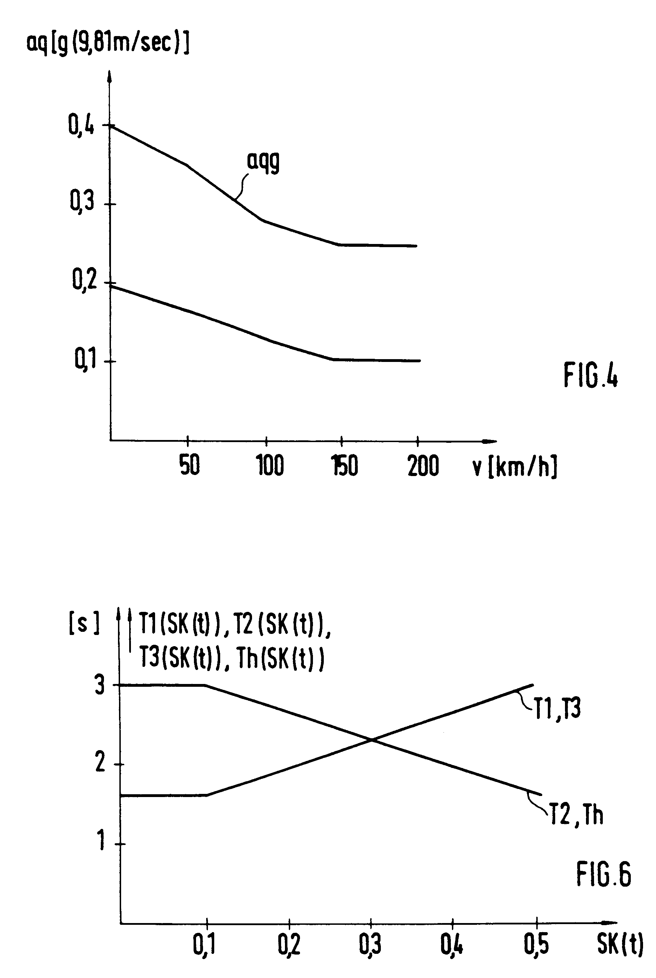

Die erste Querbeschleunigungs- Grenzlinie aqgl(v(t)) ist hierbei vorzugsweise fahrgeschwindigkeitsabhängig und die entsprechenden durch die Grenzline einer bestimmten Fahrgeschwindigkeit v(t) zugewiesenen Grenzwerte werden mit steigender Fahrgeschwindigkeit v(t) reduziert. Eine entsprechende Kennlinie ist in **Fig. 4** dargestellt.

Der zweite negative Längsbeschleunigungs- Grenzwert albbg(nmot, g, SK(t))= =k(g-1, SK(t))∗dv/dt$|_{g-1}$ wird gemäß einem Produkt aus einem gangstufenabhängigen Faktor k(g-1, SK(t)) und einem bei den augenblicklichen Betriebsbedingungen des Kraftfahrzeugs errechneten Wert der in der nächstniedrigen Gangstufe g-1 zu erwartenden Längsbeschleunigung dv/dt$|_{g-1}$ ermittelt.

Zur Ermittlung dieser in der nächstniedrigen Gangstufe g-1 zu erwartenden Längsbeschleunigung dv/dt$|_{g-1}$ wird zunächst der Wert der augenblicklichen Fahrgeschwindigkeit v(t) herangezogen, aus dem die in der nächstniedrigen Gangstufe g-1 zu erwartende Motordrehzahl nmot(t)$|_{g-1}$=i(g-1)∗v(t) ermittelt wird. Hierzu wird das Produkt aus dem augenblicklichen Wert der Fahrgeschwindigkeit v(t) und dem Wert der Getriebeübersetzung i(g-1) in der nächstniedrigen Gangstufe g-1 gebildet.

Der Wert der in der nächstniedrigen Gangstufe g-1 zu erwartenden Längsbeschleunigung dv/dt$|_{g-1}$ wird schließlich über das Kennfeld ALB(g, nmot) aus der nächstniedrigen Gangstufe g-1 und dem in der nächstniedrigen Gangstufe zu erwartenden Wert der Motordrehzahl nmot(t)$|_{g-1}$ bestimmt.

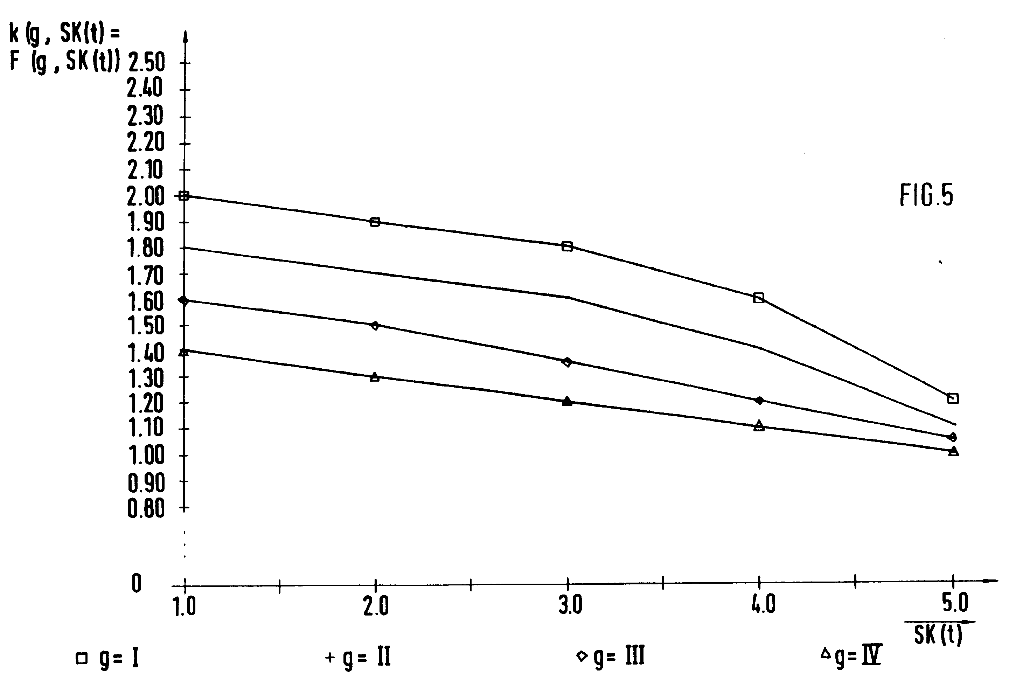

Der gangstufenabhängige Faktor k(g-1, SK(t)) wird über ein zweites Kennfeld F(g, SK(t)) aus der nächstniedrigen Gangstufe (g-1) ermittelt k(g-1, SK(t))=F(g, SK(t)). Ein Beispiel für das zweite Kennfeld ist der **Fig. 5** zu entnehmen.

Der zweite Fahrgeschwindigkeits- Grenzwert vg(g, SK(t), t) hängt von der Gangstufe g und der Fahraktivität SK(t) ab.

Die Wirkung der einzelnen Verfahrensschritte erklärt sich wie folgt:
- Durch Überwachen der Betätigung der Betriebsbremse des Kraftfahrzeugs (Bremssignal b(t)=1), oder alternativ oder ergänzend hierzu, durch prüfen, ob die zeitliche Änderung der Fahrgeschwindigkeit dv(t)/dt unterhalb des ersten negativen Längsbeschleunigungs- Grenzwerts albg(g, nmot) liegt, dv(t)/dt<albg(g, nmot), wird der Fahrerwunsch nach verstärktem Verzögern des Fahrzeugs beziehungsweise nach Rückschaltung abgeleitet.
- Durch Prüfen, ob die Querbeschleunigung aq(t) unterhalb der ersten Querbeschleunigungs- Grenzlinie aqg1(v(t)) liegt, wird überwacht, ob das Fahrzeug nicht bereits eine Kurve bei relativ hoher Querbeschleunigung aq(t) befährt. Liegt eine derartige Kurvenfahrt vor, so wird die Rückschaltung unterbunden, damit nicht durch die sich sonst erhöhende Bremswirkung der Kraftschluß zwischen Rad und Fahrbahn verloren geht.
- Eine vergleichbare Sicherheitsfunktion stellt die Überwachung des Unterschreitens des zweiten negativen Längsbeschleunigungs- Grenzwerts albbg(nmot, g, SK(t)) dar: Hierbei wird ermittelt, ob die zu erwartende Verzögerung des Kraftfahrzeugs nach einer angeforderten Rückschaltung nicht zu einem Überschreiten der Haftreibungsgrenze der Räder führen würde.

Hierzu wird aus der beim augenblicklichen Fahrzustand nach Rückschaltung zu erwartenden Verzögerung durch Gewichtung (Multiplikation) mit dem gangstufenabhängigen Faktor k(g-1, SK(t)) eine augenblicklich maximal zulässige Verzögerung ermittelt und diese mit der augenblicklichen Fahrzeugverzögerung dv(t)/dt verglichen; ist die augenblickliche Verzögerung höher, wird eine Rückschaltung unterbunden.

Der gangstufenabhängige Faktor k(g-1, SK(t)) berücksichtigt hierbei, daß der zweite negative Längsbeschleunigungs- Grenzwert albbg kleiner als der erste negative Längsbeschleunigungs- Grenzwert albg(g, nmot), also betragsmäßig größer (entsprechend einer höheren Verzögerungsrate) sein muß.
- Mit der Überwachung des Überschreitens des gangstufenabhängigen Fahrgeschwindigkeits- Grenzwerts vg(g, SK(t), t) können weitere Sicherheitskriterien bezüglich einer Rückschaltung bei zu hoher Fahrgeschwindigkeit oder das Verhindern des Überschreitens von Drehzahlgrenzen der antreibenden Brennkraftmaschine nach Rückschalten erfüllt werden. Diese Sicherheitskriterien sind stark fahrzeugspezifisch und müssen daher individuell an jedes Fahrzeug angepaßt werden, so daß sich die Darstellung eines entsprechenden Kennfelds erübrigt.

Um auch nach dem Heranfahren an Kurven oder dem Anbremsen vor Kurven einen Wechsel der Gangstufe g während der Kurvenfahrt zu vermeiden, wird die Querbeschleunigung aq(t) des Fahrzeugs überwacht. Der Wechsel der Gangstufe g wird vermieden oder der Zeitraum T1(SK(t)) wird zu Null gesetzt, sofern der Betrag der Querbeschleunigung ($|$aq(t)$|$) eine von der Fahrgeschwindigkeit v(t) abhängige zweite Querbeschleunigungs-Grenzlinie aqg2(v(t)) entsprechend **Fig. 4** überschreitet bzw. solange nach Unterschreiten der Querbeschleunigungs- Grenzlinie aqg2(v(t)) ein dritter Zeitraum T3(SK(t)) noch nicht verstrichen ist. Die zweite Querbeschleunigungs- Grenzlinie aqg2(v(t)) zur Kurvenerkennung liegt hierbei - wie in **Fig. 4** ersichtlich - deutlich niedriger als die erste Querbeschleunigungs- Grenzlinie aqg1(v(t)).

Ferner können noch im Schubbetrieb Gangwechsel, insbesondere jedoch Rückschaltungen vermieden und/oder die Zeiträume (T1(SK(t)), T2(SK(t)), T3(SK(t))) zu Null gesetzt werden, sofern an wenigstens einem der Räder des Kraftfahrzeugs übermäßiger Radschlupf auftritt oder der Kraftschluß zwischen wenigstens einem Rad des Kraftfahrzeugs und der befahrenen Fahrbahn unterbrochen ist.

Hierbei werden Schaltungen nur dann zugelassen, wenn eine Differenzgeschwindigkeit Dv(t)=vref(t)-v(t) zwischen einer Geschwindigkeit (vref(t)) einer nicht angetriebenen Achse und der an einer angetriebenen Achse erfaßten Fahrgeschwindigkeit v(t) einen zulässigen Differenzgeschwindigkeitswert Dvzul (SK(t)) nicht überschreitet:

$$Dv(t)<Dvzul(SK(t)).$$

Bei Überschreiten des zulässigen Differenzgeschwindigkeitswerts Dvzul(SK(t)) kann zusätzlich

- eine Wandlerüberbrückungskupplung eines mit einem Drehmomentwandler ausgestatteten Getriebes geöffnet,
- eine Haltezeit Th gesetzt werden, während der eine Hochschaltung nicht unterbunden werden kann,
- die eingelegte Gangstufe g um eins erhöht werden (Hochschaltung) und
- Rückschaltungen verhindert werden,

wobei diese Funktionen wieder zurückgesetzt werden, wenn Zugbetrieb erkannt wird und positive Werte der Änderung der Fahrgeschwindigkeit v(t) vorliegen.

Die Zeiträume T1(SK(t)), T2(SK(t)), T3(SK(t)) und Th(SK(t)) können sowohl von gleicher, als auch unterschiedlicher Zeitdauer sein, und wenigstens einer der Zeiträume oder der Fahrgeschwindigkeits- Grenzwert vg(g, SK(t), t) oder der gangstufenabhängige Faktor k(g-1, SK(t)) oder der zulässige Differenzgeschwindigkeitswert Dvzul(SK(t)) können willkürlich einstellbar sein und vorzugsweise zusammen mit einer Einstellung der Schaltkennfelder SKFj mittels des Programmwählschalters 15 derart eingestellt werden (verbrauchsoptimiertes Schaltkennfeld SKF1, leistungsoptimiertes Schaltkennfeld SKF2), daß bei mehr leistungsoptimierten Schaltkennfeldern (Fahrprogrammen) die Zeiträume T1(SK(t)), T3(SK(t)) und der Fahrgeschwindigkeits- Grenzwert vg(g, SK(t)) größer und die Zeiträume T2(SK(t)), Th(SK(t)), der gangstufenabhängige Faktor k(g-1, SK(t)) und der zulässige Differenzgeschwindigkeitswert Dvzul (SK(t)) kleiner werden (siehe **Fig. 5** bzw. **Fig. 6**).

Sieht die Getriebesteuerung eine selbsttätige Anpassung der Schaltkennfelder an den Fahrstil des Fahrers oder eine Verkehrssituation vor, so können wenigstens einer der Zeiträume T1(SK(t)), T2(SK(t)), T3(SK(t)) oder Th(SK(t)) oder wenigstens der Fahrgeschwindigkeits- Grenzwert vg(g, SK(t)) oder der gangstufenabhängige Faktor k(g-1, SK(t)) oder der zulässige Differenzgeschwindigkeitswert Dvzul(SK(t)) von der den Fahrstil des Fahrers oder dessen verkehrssituationsbedingtes Handeln im Bezug auf die Steuerung des Kraftfahrzeugs längerfristig bewertenden Fahraktivität SK(t) abhängig sein. Mit wachsender, mehr leistungsorientierter Fahraktivität SK(t) werden die Zeiträume T1(SK(t)), T3(SK(t)) und der Fahrgeschwindigkeits- Grenzwert vg(g, SK(t)) größer und die Zeiträume T2(SK(t)), Th(SK(t)), der gangstufenabhängige Faktor k(g-1, SK(t)) und der zulässige Differenzgeschwindigkeitswert Dvzul(SK(t)) kleiner (siehe **Fig. 5 bzw. Fig. 6**).

Die Fahraktivität SK(t) wird durch eine den Fahrstil des Fahrers oder dessen verkehrssituationsbedingtes Handeln in Bezug auf die Steuerung längerfristig bewertenden, funktionellen Zusammenhang (gleitende Mittelwertbildung aus aktuellen und vergangenen Werten einer einzigen Betriebskenngröße oder einer zu einer einzigen aus mehreren Betriebskenngrößen eines Kraftfahrzeugs zusammengesetzten Größe ermittelt. Dies kann beispielsweise analog zu der in der DE- 39 22 051 A1 oder der DE- 33 41 652 C2 gezeigten Weise geschehen.

**Patentansprüche**

1. Verfahren zur Steuerung eines vorzugsweise elektro- hydraulisch betätigten selbsttätig schaltenden Getriebes (2), eines insbesondere mit einer Brennkraftmaschine ausgerüsteten Kraftfahrzeugs, wobei die Brennkraftmaschine mittels eines Leistungssteuerorgans beeinflußbar ist und Gangstufen (g) des Getriebes (2) über Schaltkennfelder (SKFj) wenigstens abhängig von der Drosselklappenstellung (alpha(t)), der Fahrgeschwindigkeit (v(t)) und von der Motordrehzahl (nmot(t)) selbsttätig geschaltet werden, wobei eine stufenweise Rückschaltung (Vergrößerung der Übersetzung) erfolgt, wenn sowohl
   - die zeitliche Änderung der Fahrgeschwindigkeit (dv(t)/dt) kleiner als ein erster negativer Längsbeschleunigungs- Grenzwert (albg(g, nmot, t)) ist, als auch
   - die mittels eines Querbeschleunigungssensors (17) erfaßte Querbeschleunigung (aq(t)) unterhalb einer ersten Querbeschleunigungs- Grenzlinie (aqg1(v(t)) liegt, als auch
   - die zeitliche Änderung der Fahrgeschwindigkeit (dv(t)/dt) größer als ein zweiter negativer Längsbeschleunigungs- Grenzwert (albbg(nmot, g, SK(t), t)) ist, als auch
   - die Fahrgeschwindigkeit (v(t)) kleiner als ein Fahrgeschwindigkeits- Grenzwert (vg(g, SK(t), t)) ist und
   - der zweite negative Längsbeschleunigungs- Grenzwert (albbg(nmot, g, SK(t), t)) gemäß einem Produkt aus einem gangstufenabhängigen Faktor (k(g-1, SK(t))) und einem mit dem augenblicklichen Wert der Fahrgeschwindigkeit (v(t)) zu ermittelnden Wert der in der nächstniedrigen Gangstufe (g-1) zu erwartenden Längsbeschleunigung bestimmt wird, indem die in der nächstniedrigen Gangstufe (g-1) zu erwartende Motordrehzahl (nmot(t)$|_{g-1}$)) aus dem augenblicklichen Wert der Fahrgeschwindigkeit (v(t)) und dem Wert der Getriebeübersetzung (i(g-1)) in der nächstniedrigen Gangstufe (g-1) ermittelt wird und der in der nächstniedrigen Gangstufe (g-1) zu erwartenden Längsbeschleunigung (dv/dt$|_{g-1}$) ein Wert zugewiesen wird, der über das Kennfeld (ALB(g, nmot)) aus der nächstniedrigen Gangstufe (g-1) und dem ermittelten, in der nächstniedrigen Gangstufe (g-1) zu erwartenden Wert der Motordrehzahl (nmot(t)$|_{g-1}$) bestimmt wird.

2. Verfahren nach Anspruch 1, **dadurch gekennzeichnet,** daß der erste negative Längsbeschleunigungs- Grenzwert (albg(g, nmot, t)) von den augenblicklichen Werten der eingelegten Gangstufe (g) und der Motordrehzahl (nmot(t)) abhängig ist und der Längsbeschleunigung (dv/dt; Verzögerung) des in definiertem Zustand auf ebener Fahrbahn rollenden Kraftfahrzeugs bei geschlossener Drosselklappe und bei den jeweiligen Wertepaaren der augenblicklich eingelegten Gangstufe (g) und der Motordrehzahl (nmot) entspricht.

3. Verfahren nach Anspruch 2, **dadurch gekennzeichnet,** daß der erste negative Längsbeschleunigungs- Grenzwert (albg(g, nmot, t)) mit den Augenblickswerten der Gangstufe (g) und der Fahrgeschwindigkeit (v(t)) über ein erstes Kennfeld (ALB(g, nmot)) ermittelt wird.

4. Verfahren nach Anspruch 1, **dadurch gekennzeichnet,** daß der gangstufenabhängige Faktor (k(g-1, SK(t))) über ein zweites Kennfeld (k(g-1, SK(t))) aus der nächstniedrigen Gangstufe (g-1) ermittelt wird.

5. Verfahren nach Anspruch 1, **dadurch gekennzeichnet,** daß der FahrgeschwindigkeitsGrenzwert (vg(g, Sk(t), t)) wenigstens von der augenblicklich eingelegten Gangstufe (g) abhängt.

6. Verfahren nach Anspruch 1, **dadurch gekennzeichnet,** daß ein Wechsel der Gangstufe (g) vermieden wird, sofern der Betrag der Querbeschleunigungs (|aq(t)|) eine von der Fahrgeschwindigkeit (v(t)) abhängige zweite Querbeschleunigungs-Grenzlinie (aqg2(v(t))) überschreitet, bzw. solange nach Unterschreiten der zweiten Querbeschleunigungs-Grenzlinie (aqg2(v(t))) ein Zeitraum (T3(SK(t))) noch nicht verstrichen ist.

7. Verfahren nach Anspruch 1, **dadurch gekennzeichnet,** daß die Rückschaltung um jeweils eine Gangstufe erfolgt und zwischen zwei Schaltungen wenigstens ein zweiter Zeitraum (T2(SK(t))) liegt.

8. Verfahren nach wenigstens einem der vorangehenden Ansprüche, **dadurch gekennzeichnet,** daß wenigstens einer der Zeiträume (T2(SK(t)), T3(SK(t))) oder wenigstens der Fahrgeschwindigkeits- Grenzwert (vg(g, Sk(t), t)) oder der gangstufenabhängige Faktor (k(g-1, SK(t))) willkürlich einstellbar ist bzw. sind und vorzugsweise zusammen mit einer Einstellung der Schaltkenntelder (SKFj) derart eingestellt werden, daß bei mehr leistungoptimierten Fahrprogrammen der Zeitraum (T3(SK(t))) und der Fahrgeschwindigkeits-Grenzwert (vg(g, SK(t), t)) größer werden, und der zweite Zeitraum (T2(SK(t))) und der gangstufenabhängige Faktor (k(g-1, SK(t))) kleiner werden.

9. Verfahren nach wenigstens einem der vorangehenden Ansprüche, **dadurch gekennzeichnet,** daß wenigstens einer der Zeiträume (T1(SK(t)), T2(SK(t)), T3(SK(t)), Th(SK(t))) oder wenigstens der Fahrgeschwindigkeits- Grenzwert (vg(g, Sk(t), t)) oder der gangstufenabhängige Faktor (k(g-1, SK(t))) oder der zulässige Differenzgeschwindigkeitswert (Dvzul(SK(t))) von einer den Fahrstil des Fahrers oder eine Verkehrssituation bewertenden Fahraktivität (SK(t)) abhängig sind und mit wachsender, mehr leistungsorientierter Fahraktivität (SK(t)) die Zeiträume (T1(SK(t)), T3(SK(t))) und der Grenzwert (vg(g, SK(t), t)) größer werden, und die Zeiträume (T2(SK(t)), Th(SK(t))), der gangstufenabhängige Faktor (k(g-1, SK(t))) und der zulässige Differenzgeschwindigkeitswert (Dvzul(SK(t))) kleiner werden.

## Claims

1. A method of controlling an automatically changing gear unit (2), which is preferably electrohydraulically operated, of a motor vehicle which is in particular equipped with an internal combustion engine, wherein the internal combustion engine can be influenced by means of a power control device, and gears (g) of the gear unit (2) are changed automatically by way of switching characteristic fields (SKFj) at least depending upon the throttle valve position (alpha(t)), the travelling speed (v(t)) and of the engine speed (nmot(t), wherein a step-by-step changing back (increase in the gear ratio) takes place when both
   - the alteration of the travelling speed over time (dv(t)/dt) is less than a first negative longitudinal acceleration boundary value (albg(g,nmot,t)), and
   - the transverse acceleration (aq(t)) detected by means of a transverse acceleration sensor (17) lies below a first transverse acceleration boundary value (aqg1(v(t)), and
   - the alteration of the travelling speed over time (dv(t)/dt) is greater than a second negative longitudinal acceleration boundary value (albbg(nmot,g,SK(t),t)), and
   - the travelling speed (v(t)) is less than a travelling speed boundary value (vg(g,SK(t),t)) and
   - the second negative longitudinal acceleration boundary value (albbg(nmot,g,SK(t),t)) is determined according to a product of a factor (k(g-1,SK(t))) which is dependent upon the gear and a value of the longitudinal acceleration to be expected in the adjacent lower gear (g-1), which value is to be determined with the current value of the travelling speed (v(t)), the engine speed $(nmot(t)^|_{g-1})$) to be expected in the adjacent lower gear (g-1) being determined from the current value of the travelling speed (v(t)) and the value of the gear transmission (i(g-1) in the adjacent lower gear (g-1) and the longitudinal acceleration $(dv/dt^|_{g-1})$ to be expected in the adjacent lower gear (g-1) being assigned a value which is determined by way of the characteristic field (ALB(g,nmot)) from the adjacent lower gear (g-1) and the determined value of the engine speed $(nmot(t)^|_{g-1})$ to be expected in the next adjacent gear (g-1).

2. A method according to Claim 1, characterised in that the first negative acceleration boundary value (albg(g,nmot, t)) depends upon the current values of the selected gear (g) and the engine speed (nmot(t)) and the longitudinal acceleration (dv/dt; deceleration) of the motor vehicle, travelling in the defined state on a level roadway with the throttle valve closed and with the respective pairs of values, corresponds to the currently selected gear (g) and the engine speed (nmot).

3. A method according to Claim 2, characterised in that the first negative longitudinal acceleration boundary value (albg(g,nmot,t)) is determined with the current values of the gear (g) and of the travelling speed (v(t)) by way of a first characteristic field (ALB(g,nmot)).

4. A method according to Claim 1, characterised in that the factor (k,g-1,SK(t))) which is dependent upon the gear is determined by way of a second characteristic field (k,g-1,SK(t))) from the next lower gear (g-1).

5. A method according to Claim 1, characterised in that the travelling speed boundary value (vg(g,(Sk(t),t)) depends at least upon the currently selected gear (g).

6. A method according to Claim 1, characterised in that a change of the gear (g) is avoided in so far as the amount of the transverse acceleration (|aq(t)|) exceeds a second transverse acceleration boundary line (aqg2(v(t))) which is dependent upon the travelling speed (v(t)) or so long as a time period (T3(SK(t))) has not yet elapsed after the said amount falls below the second transverse acceleration boundary line (aqg2(v(t))).

7. A method according to Claim 1, characterised in that the changing back takes place in each case by one gear and at least a second time period (T2(SK(t))) lies between two changes.

8. A method according to at least one of the preceding claims, characterised in that at least one of the time periods (T2(SK(t), T3(SK(t))) or at least the travelling speed boundary value (vg(g,Sk(t),t)) or the factor (k(g-1,SK(t))) which is dependent upon the gear is or are adjustable at will and are preferably adjusted together with an adjustment of the switching characteristic fields (SKFj) in such a way that in driving programmes which are better optimised in terms of power the time period (T3(SK(t))) and the travelling speed boundary value (vg(g,SK(t),t)) become greater and the second time period (T2(SK(t))) and the factor (k(g-1,SK(t))) which is dependent upon the gear become smaller.

9. A method according to at least one of the preceding claims, characterised in that at least one of the time periods (T1(SK(t), T2(SK(t)), T3(SK(t)), Th(SK(t))) or at least the travelling speed boundary value (vg(g,Sk(t),t)) or the factor (k(g-1,SK(t))) which is dependent upon the gear or the permissible differential speed value (Dvzul(SK (t))) are dependent upon a driving activity (SK(t)) which evaluates the driver's driving style or a traffic situation and with increasing, more power-oriented driving activity (SK(t)) the time periods (T1(SK(t)), T3(SK(t))) and the boundary value (vg(g,SK(t),t) become greater, and the time periods (T2(SK(t)), Th(SK(t))), the factor (k(g-1,SK(t))), which is dependent upon the gear, and the permissible differential speed value (Dvzul (SK(t))) become smaller.

## Revendications

1. Procédé pour commander une boite de vitesses (2) automatique, de préférence électro-hydraulique, d'un véhicule équipé notamment d'un moteur à combustion interne, le moteur pouvant être influencé au moyen d'un organe de commande de puissance et les vitesses (g) de la boite de vitesses (2) étant commutées automatiquement par l'intermédiaire de champs caractéristiques de commande (SKFj) au moins en fonction de la positon du papillon des gaz (alpha(t)), de la vitesse de roulement (v(t)) et du régime du moteur (nmot(t)), une rétrogradation graduelle étant effectuée (augmentation de la démultiplication) lorsque
   - la variation dans le temps de la vitesse de roulement (dv(t)/dt) est inférieure à une première valeur limite d'accélération longitudinale négative (albg(g, nmot,t)), et que
   - l'accélération transversale (aq(t)) saisie au moyen d'un capteur d'accélération transversale (17) se trouve en-dessous d'une première courbe limite d'accélération transversale (aqg1(v(t)), et que
   - la variation dans le temps de la vitesse de roulement (dv(t)/dt) est plus grande qu'une deuxième valeur limite d'accélération longitudinale négative (albbg (nmot,g,SK(t),t)) et que
   - la vitesse de roulement (v(t)) est inférieure à une valeur limite de vitesse de roulement (vg(g,SK(t),t)) et
   - la deuxième valeur limite d'accélération longitudinale négative (albbg(nmot,g,SK(t),t)) est déterminée d'après le produit d'un facteur (k(g-1SK(t))) dépendant du rapport de vitesse et d'une valeur de l'accélération longitudinale attendue dans le rapport de vitesse le plus bas suivant (g-1), cette valeur étant à calculer avec la valeur instantanée de la vitesse de roulement (v(t)), par le fait que le régime du moteur (nmot(t)$_{(g-1)}$) attendu dans le rapport de vitesse le plus bas suivant (g-1) est calculé à partir de la valeur instantanée de la vitesse de roulement (v(t)) et de la valeur de multiplication de la transmission (i(g-1)) dans le rapport de vitesse le plus bas suivant (g-1), et qu'on affecte à l'accélération longitudinale attendue (dv/dt$_{(g-1)}$) dans le rapport de vitesse le plus bas suivant (g-1) une valeur qui est déterminée par l'intermédiaire du champ caractéristique (ALB(g,nmot)) à partir du rapport de vitesse le plus bas suivant (g-1) et de la valeur calculée du régime du moteur (nmot(t)-$_{(g-1)}$) attendue dans le rapport de vitesse le plus bas suivant (g-1).

2. Procédé selon la revendication 1, caractérisé en ce que la première valeur limite d'accélération longitudinale négative (albg(g,nmot,t)) dépend des valeurs instantanées du rapport de vitesse (g) passé et du régime moteur (nmot(t)) et correspond à l'accélération longitudinale (dv/dt; décélération) du véhicule à moteur roulant dans un état défini sur une chaussée plane, le papillon des gaz étant fermé, avec les paires de valeurs respectives du rapport de vitesse momentané passé (g) et du régime moteur (nmot).

**3.** Procédé selon la revendication 2, caractérisé en ce que la première valeur limite d'accélération longitudinale négative (albg(g,nmot,t)) est calculée avec les valeurs instantanées du rapport de vitesse (g) et de la vitesse de roulement (v(t)) par l'intermédiaire d'un premier champ caractéristique (ALB(g,nmot)).

**4.** Procédé selon la revendication 1, caractérisé en ce que le facteur (k(g-1,SK(t))) dépendant du rapport de vitesse est calculé à partir du rapport de vitesse le plus bas suivant (g-1).

**5.** Procédé selon la revendication 1, caractérisé en ce que la valeur limite de la vitesse de roulement (vg(g,SK(t),t)) dépend au moins du rapport de vitesse (g) momentané passé.

**6.** Procédé selon la revendication 1, caractérisé en ce qu'on évite de changer de vitesse (g) pour autant que la valeur de l'accélération transversale ($|aq(t)|$) dépasse une deuxième courbe limite d'accélération transversale (aqg2(v(t))) dépendant de la vitesse de roulement (v(t)) et/ou si, cette valeur étant restée en-dessous de la deuxième courbe limite d'accélération transversale (aqg2(v(t))) un laps de temps (T3(SK(t))) n'est pas encore écoulé.

**7.** Procédé selon la revendication 1, caractérisé en ce que l'on rétrograde chaque fois d'une vitesse et qu'au moins un laps de temps (T2(SK(t))) existe entre deux passages de vitesses.

**8.** Procédé selon l'une au moins des revendications précédentes, caractérisé en ce que l'on peut régler à volonté au moins l'un des laps de temps (T2(SK(t)), T3(SK(t))) ou au moins la valeur limite de la vitesse de roulement (vg(g,SK(t),t)), ou le facteur (k(g-1,SK(t))) dépendant des rapports de vitesse, et qu'on peut les régler de préférence en même temps que le réglage des champs caractéristiques de commutation (SKF$_j$), de telle sorte qu'avec des programmes de conduite plus orientés vers la puissance, le laps de temps (T3(SK(t))) et la valeur limite de vitesse de roulement (vg(g,SK(t),t)) augmentent et le deuxième laps de temps (T2(SK(t))) et le facteur dépendant des rapports de vitesse (k(g-1),SK(t))) diminuent.

**9.** Procédé selon l'une au moins des revendications précédentes, caractérisé en ce qu'au moins un des laps de temps (T1(Sk(t)), T2(SK(t)), T3(SK(t)), Th(SK(t))), ou au moins la valeur limite de la vitesse de roulement (vg(g,Sk(t),t)), ou le facteur (k(g-1),SK(t))), ou la valeur de vitesse différentielle autorisée (Dvzul(SK(t))) dépendent d'une activité de conduite (SK(t)) évaluant le style de conduite du conducteur, ou une situation de la circulation et que, au fur et à mesure qu'augmente une activité de conduite plus orientée vers la puissance (SK(t)), les laps de temps (T1(SK(t)), T3(SK(t))) et la valeur limite (vg(g,SK(t),t)) augmentent et les intervalles de temps (T2(SK(t)), Th(SK(t))), le facteur dépendant des rapports de vitesse (k(g-1, SK(t))) et la vitesse différentielle autorisée (Dvzul(SK(t))) diminuent.

FIG.1

vref(t)

aq(t)

b(t)

kd(t)

ll(t)

alpha(t)

n mot(t)

ml(t)

v(t)

wk

ds

sIII/IV

sI/II

sII/III

FIG.2

FIG.3

EP 0 589 910 B1

aq[g(9,81m/sec)]

0,4

0,3        aqg

0,2

0,1

        50      100      150      200      v[km/h]

FIG.4

[s]   T1(SK(t)), T2(SK(t)),
      T3(SK(t)), Th(SK(t))

3

2                                                T1,T3

1                                                T2,Th

        0,1     0,2     0,3     0,4     0,5      SK(t)

FIG.6

14

FIG.5

k (g , SK(t) =
F (g , SK(t))

□ g = I        + g = II        ◇ g = III        △ g= IV

EP 0 589 910 B1